# EUROPÄISCHE PATENTSCHRIFT

(11) **EP 0 440 943 B1**
(45) Veröffentlichungstag und Bekanntmachung des Hinweises auf die Patenterteilung: **31.08.1994**
(21) Anmeldenummer: 90124341.0
(22) Anmeldetag: 15.12.1990
(51) Int. Cl.: F16F 9/46, B60G 17/08, F16F 9/52

(54) **Dämpfungssystem mit einem Schwingungsdämpfer**
Damping system with a shock absorber
Système d'amortissement avec un amortisseur de chocs

(30) Priorität: 09.02.1990 DE 4003959
(43) Veröffentlichungstag der Anmeldung: 14.08.1991
(73) Patentinhaber: ROBERT BOSCH GMBH, 70442 Stuttgart (DE)
(72) Erfinder: Vogel, Wolfgang, Dipl.-Ing., W-7016 Gerlingen (DE); Weisser, Roland, Dipl.-Ing. (FH), W-7731 Unterkirnach (DE)

(56) Entgegenhaltungen:
- WO-A-90/12289
- DE-A- 3 708 192
- DE-A- 3 727 121
- DE-U- 8 319 490
- FR-A- 2 609 798
- PATENT ABSTRACTS OF JAPAN vol. 9, no. 279 (M-427)(2002) 07 November 1985, & JP-A-60 121338 (ATSUGI) 28 Juni 1985,

## Beschreibung

### Stand der Technik

Die Erfindung betrifft ein Dämpfungssystem mit einem Schwingungsdämpfer nach der Gattung des Hauptanspruchs.

Bei Schwingungsdämpfern wird üblicherweise die Dämpfung erzeugt, indem ein Druckmedium durch eine in dem Dämpfungssystem vorgesehene Strömungsverbindung geführt wird, wobei die Strömungsverbindung eine Drosselstelle enthält. Von nachteiligem Einfluß hierbei ist, daß die Viskosität des Druckmediums üblicherweise mehr oder wenig von der Temperatur des Druckmediums abhängt. Damit ergibt sich eine von der Temperatur des Druckmediums abhängige Dämpfung des Schwingungsdämpfers.

Zur Abhilfe gibt es verschiedene Lösungen. Bekannt ist, um die Dämpfung konstant zu halten, in einem Dämpfungssystem eine thermostatisch geregelte Heizung vorzusehen (z.B. DE-A-3 708 192). Damit soll die Temperatur des Druckmediums und damit die Dämpfung des Schwingungsdämpfers auf demselben Niveau gehalten werden. Nachteilig hierbei sind ein hoher Energieverbrauch und eine gewisse Wartezeit nach längerer Nichtbenutzung des Dämpfungssystems.

Darüberhinaus gibt es einen Stoßdämpfer mit einem temperaturabhängig reagierenden Steuerelement. Das Steuerelement wird von einem in einer Kammer eingeschlossenen Stoff betätigt, wobei dieser Stoff bei Temperaturschwankungen sein Volumen ändert. Nachteilig bei dieser Lösung ist insbesondere ein sehr hoher Bauaufwand.

Daneben gibt es auch noch einen Schwingungsdämpfer mit einer elektrisch veränderbaren Drosselstelle. Innerhalb des Zylinders dieses Schwingungsdämpfers ist ein Temperatursensor zur Messung der Temperatur des Druckmediums angeordnet. Durch entsprechende elektrische Verschaltung kann die veränderbare Drosselstelle in Abhängigkeit der Temperatur des Druckmediums gesteuert werden. Nachteilig hierbei ist der zusätzlich erforderliche Temperatursensor.

Bei diesen bekannten Dämpfungssystemen sind, um den Einfluß der Temperatur auf die Viskosität des Druckmediums berücksichtigen zu können, innerhalb des Dämpfungssystems bzw. innerhalb des Schwingungsdämpfers zusätzliche Bauteile erforderlich. Da der Schwingungsdämpfer üblicherweise in Fahrzeuge eingebaut wird, ist dieses zusätzliche Bauteil sehr nachteilig.

### Vorteile der Erfindung

Das zuletzt genannte Dämpfungssystem modifiziert mit den kennzeichnenden Merkmalen des Hauptanspruchs weist demgegenüber den Vorteil auf, daß zur Ermittlung der Temperatur des Druckmediums kein separater Temperatursensor erforderlich ist.

Als Temperatursensor kann so gut wie jedes elektrisch angeschlossene und aber bereits anderweitig erforderliche Dämpfungssystem-Bauteil des Dämpfungssystems dienen. Besonders gut geeignet hierfür ist insbesondere eine bereits vorhandene Magnetspule zum Verändern eines Querschnitts der Drosselstelle und/oder ein bereits vorhandener Geber zum Messen einer Stellposition z.B. des Dämpferkolbens gegenüber dem Zylinder und/oder ein bereits vorhandener Geber zum Messen einer Stellposition eines Ventilgliedes usw.

### Zeichnung

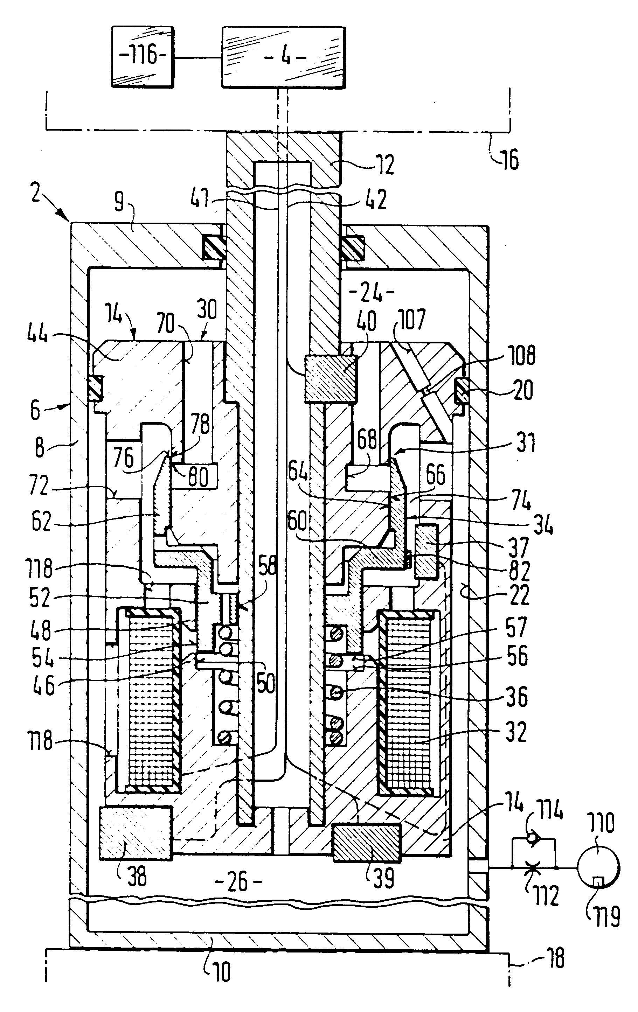

Ein Ausführungsbeispiel der Erfindung ist in der Zeichnung vereinfacht dargestellt und in der nachfolgenden Beschreibung näher erläutert.

### Beschreibung des Ausführungsbeispieles

Das dargestellte Dämpfungssystem umfaßt zumindest einen Schwingungsdämpfer 2 und ein Steuergerät 4. Der Schwingungsdämpfer 2 hat einen Zylinder 6 mit einem abschnittsweise dargestellten Mantelrohr 8 mit einer ersten Stirnseite 9 und mit einer zweiten Stirnseite 10. Aus der ersten Stirnseite 9 des Mantelrohres 8 ragt eine Kolbenstange 12 heraus. Von der Kolbenstange 12 sind nur deren beide Enden dargestellt. Die Kolbenstange 12 ist mit einem Ende mit einem abgestuften Dämpferkolben 14 verbunden und mit einem anderen Ende ist sie an einer strichpunktiert angedeuteten ersten Masse 16 angelenkt. Das heißt, der Dämpferkolben 14 ist mit der ersten Masse 16 verbunden. Die zweite Stirnseite 10 ist mit einer strichpunktiert angedeuteten zweiten Masse 18 verbunden. Die erste Masse 16 ist beispielsweise ein Fahrzeugaufbau und die zweite Masse 18 ist z.B. eine Fahrzeugachse. Der Dämpferkolben 14 kann unter Zwischenlage eines Führungsringes 20 an einer inneren Mantelfläche 22 des Mantelrohres 8 axial gleiten. Der Führungsring 20 hat gleichzeitig die Aufgabe einer Dichtung. Ein Innenraum des Zylinders 6 wird durch den Dämpferkolben 14 in einen ersten Arbeitsraum 24 und in einen zweiten Arbeitsraum 26 unterteilt. In der Zeichnung befindet sich der erste Arbeitsraum 24 oberhalb und der zweite Arbeitsraum 26 unterhalb des Dämpferkolbens 14. Die Arbeitsräume 24, 26 sind zumindest teilweise mit einem Druckmedium gefüllt.

Die beiden Arbeitsräume 24, 26 sind über eine Strömungsverbindung 30 miteinander verbunden. Im Verlauf der Strömungsverbindung 30 ist eine veränderbare Drosselstelle 31 vorgesehen. Der Dämpferkolben 14 enthält die Strömungsverbindung 30, eine Magnetspule 32, ein Ventilglied 34, eine Rückstellfeder 36 und, je nach Bedarf, einen ersten Geber 37 und ggf. noch einen zweiten Geber 38, einen dritten Geber 39 und/oder einen vierten Geber 40. Die Kolbenstange 12 ist hohl und nimmt eine erste Zuleitung 41 auf, an welche die Magnetspule 32 angeschlossen ist. Eine zweite Zuleitung 42 führt ebenfalls durch die hohl ausgebildete Kolbenstange 12. Die Geber 37, 38, 39, 40 sind an der zweiten Zuleitung 42 angeschlossen.

Die Magnetspule 32 befindet sich innerhalb eines einen Teil des Dämpferkolbens 14 bildenden Ventilkörpers 44. Der Ventilkörper 44 bildet an der Innenseite der Magnetspule 32 einen ringförmigen ersten Pol 46. Ein zweiter, ebenfalls ringförmiger Pol 48, welcher mit dem Ventilkörper 44 verbunden ist, erstreckt sich unter Wahrung eines gewissen Abstandes axial in Richtung auf den ersten Pol 46. Beide Pole 46, 48 sind mit einer koaxialen Bohrung 50 versehen, in welche ein als Anker 52 wirkender Teilbereich des hülsenförmigen Ventilgliedes 34 zumindest teilweise hineinragt. Je nach der Stellposition des Ventilgliedes 34 in der Bohrung 50 überdeckt der Anker 52 in axialer Richtung nicht nur den zweiten Pol 48, sondern auch mehr oder weniger den ersten Pol 46. Die für eine auf den Anker 52 einwirkende Magnetkraft maßgebenden Luftspalte befinden sich zwischen einem zylindrischen Außenmantel 54 des Ankers 52 und der die radialen Polflächen der Pole 46, 48 bildenden Bohrung 50, sowie zwischen einem sacklochartig zurückversetzten axialen Absatz 56 des ersten Poles 46 und einer dem Absatz 56 zugewandten Stirnseite 57 des Ankers 52.

Im Ventilglied 34 befindet sich eine axiale Durchgangsbohrung 58, in welche die Kolbenstange 12 eingesetzt ist, so daß das Ventilglied 34 auf ihr axial gleitend verschiebbar ist. Mittels der die Kolbenstange 12 umgebenden Rückstellfeder 36 wird das Ventilglied 34 mit einer in axialer Richtung wirkenden Rückstellkraft beaufschlagt, die bestrebt ist, das Ventilglied 34 vom ersten Pol 46 wegzubewegen. Dementsprechend wird der Anker 52 und damit das Ventilglied 34 bei elektrischer Erregung der Magnetspule 32 entgegen der Rückstellkraft der Rückstellfeder 36 in Richtung auf eine stärkere Überdeckung zwischen dem zylindrischen Außenmantel 54 des Ankers 52 und dem ersten Pol 46 bewegt.

Der Rückstellfeder 36 abgewandt geht der Anker 52 über eine Erweiterung in Form einer Ringscheibe 60 in ein hülsenförmiges Steuerteil 62 des Ventilgliedes 34 über, wobei der Durchmesser des Steuerteils 62 in dem dargestellten Ausführungsbeispiel vorteilhafterweise größer ist als der Durchmesser des Ankers 52. Das Steuerteil 62 kann entweder, wie in der Zeichnung dargestellt, zusammen mit dem Anker 52 Bestandteil eines Bauteils, dem Ventilglied 34, sein oder aus zwei zusammengefügten Bauteilen bestehen.

Das hülsenförmige Steuerteil 62 des Ventilgliedes 34 kann mit einer fein bearbeiteten inneren Mantelfläche 64 auf einer ebenfalls fein bearbeiteten Mantelfläche 66 des Ventilkörpers 44 gleiten.

In der Mantelfläche 66 des Ventilkörpers 44 ist ein umlaufender Ringraum 68 eingearbeitet. Eine oder mehrere axial außermittig verlaufende Aussparung bzw. Aussparungen 70 stellt bzw. stellen eine Durchflußmöglichkeit zwischen dem Ringraum 68 und dem ersten Arbeitsraum 24 her. Radial um den Ringraum 68 herum und außerhalb des Ventilgliedes 34 ist im Ventilkörper 44 mindestens eine Strömungsöffnung 72 eingearbeitet, welche eine Druchflußmöglichkeit zwischen einem das Ventilglied 34 aufnehmenden Steuerraum 74 und dem zweiten Arbeitsraum 26 herstellt.

Die Länge des Ventilgliedes 34 ist so bemessen, daß, je nach axialer Stellposition des Ventilgliedes 34, das Ventilglied den Ringraum 68 in axialer Richtung mehr oder weniger überdeckt. Am Steuerteil 62 des Ventilgliedes 34 befindet sich, der Magnetspule 32 abgewandt, eine Stirnseite 76. Die Kante zwischen der inneren Mantelfläche 64 und der Stirnseite 76 des Ventilgliedes 34 ist als Schiebersteuerkante 78 ausgebildet, welche im Zusammenwirken mit einer den Ringraum 68 begrenzenden Steuerkante 80 die Größe der veränderbaren Drosselstelle 31 der Strömungsverbindung 30 bestimmt. Die Aussparung 70, der Ringraum 68, die veränderbare Drosselstelle 31, der Steuerraum 74 und die Strömungsöffnung 72 sind Bestandteile der die beiden Arbeitsräume 24, 26 im regulären Betriebszustand verbindenden Strömungsverbindung 30.

Am Ventilkörper 44 ist in der Nähe des Ventilgliedes 34 der erste Geber 37 befestigt, welcher der Erfassung der Stellposition des Ventilgliedes 34 relativ zum Ventilkörper 44 dient. Der Geber 37, welcher beispielsweise induktiv oder kapazitiv mißt, gibt über die zweite Zuleitung 42 ein Meßsignal an das elektronische Steuergerät 4, welches über einen Soll-/Ist-Vergleichsoperator ein Stellsignal erzeugt, das über die erste Zuleitung 41 der Magnetspule 32 zugeführt wird. Damit wird ein Regelkreis gebildet, und das Ventilglied 34 läßt sich wesentlich genauer und von Toleranzen unabhängiger positionieren als ohne Rückmeldung der Ist-Stellung des Ventilgliedes 34. Je nach Funktionsweise des Gebers 37 ist es notwendig oder zumindest zweckmäßig, an dem Ventilglied 34 ein geeignetes Markierungsmaterial 82, z.B. einen Dauermagneten oder einen Kupferring, vorzusehen, damit der Geber 37 die Stellposition des Ventilgliedes 34 einwandfrei erfassen kann.

Der zweite Geber 38 ist ebenfalls an dem Ventilkörper 44 des Dämpferkolbens 14 abgeordnet. Der zweite Geber 38 dient zur Erfassung einer Stellposition des Dämpferkolbens 14 gegenüber dem Mantelrohr 8 des Zylinders 6, Der zweite Geber 38 ist z.B. ein induktiver Geber und das Mantelrohr 8 ist, damit der zweite Geber 38 die Stellposition ermitteln kann, z.B. mit einer geeigneten strukturierten Oberfläche versehen.

An dem Ventilkörper 44 des Dämpferkolbens 14 kann auch noch der dritte Geber 39 angeordnet sein. Der dritte Geber 39 ist z.B. ein Beschleunigungsgeber welcher z.B. eine Beschleunigung des Dämpferkolbens 14 vermittelt.

Darüberhinaus kann das Dämpfungssystem auch noch den vierten Geber 40 umfassen. Der Geber 40 kann vorteilhafterweise einerseits mit der Kolbenstange 12 und andererseits mit dem Ventilkörper 44 des Dämpferkolbens 14 verbunden sein. Damit kann der vierte Geber 40 z.B. zur Ermittlung der auf die Kolbenstange 12 einwirkenden Kräfte, was der Dämpfung entspricht, dienen. Der vierte Geber 40 kann aber z.B. auch ein Druckgeber zur Erfassung von hydraulischen oder pneumatischen Drücken sein. Der vierte Geber 40 ist in diesem Fall z.B. so angeordnet, daß er einerseits Verbindung zum ersten Arbeitsraum 24 und andererseits zum zweiten Arbeitsraum 26 hat. Damit kann über den vierten Geber 40 ebenfalls die Dämpfung ermittelt werden, weil nämlich der vierte Geber 40 einen Druckunterschied zwischen den in den Arbeitsräumen 24, 26 herrschenden Drücken erfaßt.

In der Zeichnung ist der Übersichtlichkeit wegen der Ventilkörper 44 so dargestellt, als ob er aus einem Stück bestehen würde. Um aber z.B. die Magnetspule 32, die Rückstellfeder 36 und den Steuerschieber 34 montieren zu können, ist es notwendig, den Ventilkörper 44 aus mehreren Stücken herzustellen und zusammenzufügen, was jedem Fachmann geläufig ist. Das Ventilglied 34 ist in seiner im stromlosen Zustand eingenommenen Stellposition dargestellt. In dieser Stellposition ist die veränderbare Drosselstelle 31 nahezu vollständig geschlossen.

Neben der Strömungsverbindung 30 mit der Drosselstelle 31 kann der Dämpferkolben 14 auch noch mit mindestens einer weiteren Strömungsverbindung 107 versehen sein. In der weiteren Strömungsverbindung 107 kann z.B. ein elektrisch angeschlossenes Dämpfungssystem-Bauteil 108 vorgesehen sein. Das Dämpfungssystem-Bauteil 108 kann z.B. eine weitere Magnetspule oder ein sonstiger ohmscher, induktiver oder kapazitiver Widerstand sein.

Die Strömungsverbindungen 30, 107 sind in dem dargestellten Ausführungsbeispiel im Dämpferkolben 14 angeordnet. Es ist aber auch möglich, die Strömungsverbindungen 30, 107 und/oder weitere Strömungsverbindungen außerhalb des Dämpferkolbens 14 z.B. an einer Außenfläche des Mantelrohres 8 des Zylinders 6 oder aber auch an einer sonstigen nicht dargestellten Trennwand innerhalb des Zylinders 6 anzuordnen.

Bein Einfahren der Kolbenstange 12 in den Zylinder 6 wird entsprechend dem Kolbenstangen-Querschnitt ein Teil des Druckmediums aus dem Zylinder 6 verdrängt. Beim Ausfahren der Kolbenstange 12 aus dem Zylinder 6 soll in den Zylinder 6 Druckmedium nachströmen können. Zu diesem Zweck ist der zweite Arbeitsraum 26 mit einem Ausgleichsraum 110 verbunden. Damit auch bei einem relativ niedrigen Druck in dem Ausgleichsraum 110 in dem zweiten Arbeitsraum 26 ein relativ hoher Druck und damit eine relativ große Dämpfung erzeugt werden kann, wurde zwischen dem Ausgleichsraum 110 und dem zweiten Arbeitsraum 26 eine Drossel 112 eingebaut. Beim Rückströmen des Druckmediums aus dem Ausgleichsraum 110 in den zweiten Arbeitsraum 26 ist die Drossel 112 nicht erforderlich, weshalb dieser Drossel 112 ein Rückschlagventil 114 parallel angeordnet ist. Das Rückschlagventil 114 ist so eingebaut, daß das Druckmedium nur bei Fließrichtung aus dem Ausgleichsraum 110 in den Arbeitsraum 26 durch das Rückschlagventil 114 strömen kann. Der Ausgleichsraum 110 kann z.B. ein mit Gas gefüllter Druckspeicher sein. Der Ausgleichsraum 110 kann selbstverständlich auch in bekannter Weise im Zylinder 6 integriert sein. Je nach gewünschter Dämpfung und je nach Vorspanndruck des Gases im Ausgleichsraum 110 kann gegebenenfalls auf die Drossel 112 und das Rückschlagventil 114 verzichtet werden.

Damit bei Relativbewegung zwischen dem Dämpferkolben 14 und dem Mantelrohr 8 das in einem der Arbeitsräume 24, 26 verdrängte Druckmedium-Volumen gleich dem im anderen Arbeitsraum nachfließenden Volumen ist, kann eine doppelte Kolbenstange 12 verwendet werden, die beiderseits des Dämpferkolbens 14 aus den Stirnseiten 9, 10 des Zylinders 6 herausragt. Besonders günstig ist es, wenn beide Seiten der doppelten Kolbenstange 12 in etwa gleiche Durchmesser haben.

Als Ausführungsbeispiel wurde für den erfindungsgemäßen Stoßdämpfer ein Einrohr-Stoßdämpfer gewählt. Dies ist jedoch nur beispielhaft. Der Stoßdämpfer könnte genausogut z.B. ein sogenannter Zweirohr-Stoßdämpfer sein.

Durch einen mit dem Steuergerät 4 elektrisch verbundenen Geber 116 kann über das Steuergerät 4 die Größe der veränderbaren Drosselstelle 31 der Strömungsverbindung 30 von außerhalb des Schwingungsdämpfers 2 gesteuert werden. Der Geber 116 kann z.B. ein Sensor und/oder ein sonstiger Sollwertgeber sein.

Wie bereits weiter vorne erwähnt, bestimmt im wesentlichen die veränderbare Drosselstelle 31 in der Strömungsverbindung 30 die Dämpfung des Schwingungsdämpfers 2. Wie jeder Fachmann weiß, ist die Dämpfung des Schwingungsdämpfers nicht nur von einer Drosselstelle bzw. einer Drosselfläche abhängig, sondern selbstverständlich spielt auch die Relativgeschwindigkeit zwischen dem Dämpferkolben 14 und dem Mantelrohr 8 und eine Viskosität des Druckmediums eine Rolle.

Die meisten für Schwingungsdämpfer verwendbaren Druckmedien besitzen eine temperaturabhängige Viskosität. Im allgemeinen wird die Viskosität kleiner wenn die Temperatur steigt. Wie bereits bekannt, steuert das Steuergerät 4 die Magnetspule 32 an und zwar in Abhängigkeit der von den Gebern 37, 38, 39, 40, 116 ausgehenden Signale. Damit wird das die veränderbare Drosselstelle 31 steuernde Ventilglied 34 in Abhängigkeit dieser von den Gebern 37, 38, 39, 40, 116 ausgehenden Signalen betätigt. Das heißt die veränderbare Drosselstelle 31 erhält je nach Gegebenheiten einen gewissen Wert. Da die Geber 37, 38, 39, 40, 116 keine Temperatursensoren sind, wird bei dem bisher bekannten Dämpfungssystem hierbei die Temperatur nicht berücksichtigt. Ändert sich nun im Laufe der Zeit die Temperatur des Druckmediums, so verändert sich auch die Viskosität des Druckmediums und es ändert sich, ohne daß die veränderbare Drosselstelle 31 verstellt würde, die Dämpfung des Schwingungsdämpfers 2. Dies hat bei Verwendung eines üblichen Druckmediums zur Folge, daß bei hohen Temperaturen des Druckmediums die Dämpfung des Stoßdämpfers 2 kleiner ist als bei niedrigen Temperaturen des Druckmediums. Dieser Effekt ist sehr unerwünscht. Sehr viel günstiger wäre es, wenn die Dämpfung des Schwingungsdämpfers 2 unabhängig von der Temperatur wäre. Um bei dem bisherigen Dämpfungssystem die Temperatur mit berücksichtigen zu können, war ein separater Temperatursensor erforderlich. Dies hatte den Nachteil, daß ein zusätzliches Bauteil erforderlich war.

In einem Dämpfungssystem mit einem Schwingungsdämpfer, dessen Dämpfung über eine veränderbare Drosselstelle steuerbar ist, gibt es so gut wie immer mindestens ein elektrisch angeschlossenes Dämpfungssystem-Bauteil. In dem dargestellten Ausführungsbeispiel des Dämpfungssystems handelt es sich bei der Magnetspule 32, bei den Zuleitungen 41, 42 bei den Gebern 37, 38, 39, 40, 116 und bei dem Dämpfungssystem-Bauteil 108 um je ein solches elektrisch angeschlossenes Dämpfungssystem-Bauteil. Die Magnetspule 32 umfaßt üblicherweise einen elektrisch leitenden, isolierten und gewickelten Draht. Üblicherweise besteht dieser Draht mindestens teilweise aus Kupfer. Normalerweise ändert sich bei den für die Magnetspule 32 üblicherweise verwendeten Materialien mindestens eine Größe, z.B. der ohmsche Widerstand R, in Abhängigkeit von der Temperatur. Sinn und Zweck dieser Erfindung ist es die temperaturabhängige Größe dieses elektrisch angeschlossenen Dämpfungssystem-Bauteils d. h. der Magnetspule 32 über das Steuergerät 4 auszuwerten und dementsprechend die veränderbare Drosselstelle 31 in Abhängigkeit der Temperatur zu steuern. Um die Temperatur zu erfassen, bietet es sich z.B. an, den ohmschen Widerstand R der Magnetspule 32 über das Steuergerät 4 zu ermitteln. Zur Ermittlung des ohmschen Widerstands R gibt es mehrere Möglichkeiten z.B. ist es bei mit Gleichstrom betriebener Magnetspule 32 besonders einfach, wenn man z.B. bei konstanter anstehender Spannung U über das Steuergerät 4 die Stromstärke I und daraus den Widerstand R mißt. Wird die Magnetspule 32 mit Wechselstrom betrieben, so kann man auch hier den ohmschen Widerstand R der Magnetspule 32 z.B. über eine mit Hilfe des Steuergerätes 4 durchführbare Ermittlung einer Phasenverschiebung erhalten. Bei mit Wechselstrom betriebener Magnetspule 32 hat eine Änderung des ohmschen Widerstandes R Einfluß auf eine Phasenverschiebung zwischen der angelegten Spannung U und dem fließenden Strom I. Dieser Effekt kann zu Nutze gemacht und zur Ermittlung der Temperatur dienen. Da sich die Temperatur üblicherweise relativ langsam ändert, ist es ausreichend, wenn die Temperatur nur zwischendurch in gewissen Zeitabständen gemessen wird. Damit ist es möglich z.B. die Temperatur über den ohmschen Widerstand R zu ermitteln, indem man z.B. die angelegte Spannung U während der Meßzeit konstant hält und dabei den Strom I mißt. Da eine kurze Meßzeit ausreicht, ist dies so gut wie immer problemlos möglich.

Neben der Magnetspule 32 als elektrisch angeschlossenes Dämpfungssystem-Bauteil gibt es in dem dargestellten Ausführungsbeispiel weitere elektrisch angeschlossene Dämpfungssystem-Bauteile. Weitere elektrisch angeschlossene Dämpfungssystem-Bauteile sind hier die Geber 37, 38, 39, 40, 116, die Zuleitungen 41, 42 und das Bauteil 108 in der Strömungsverbindung 107. Auch diese elektrisch angeschlossenen Dämpfungssystem-Bauteile bestehen häufig mindestens teilweise aus einem Werkstoff, welcher eine temperaturarabhängige und mittels des Steuergerätes 4 auswertbare Größe besitzt. Ändert sich z.B. der ohmsche Widerstand R der Geber 37, 38, 39, 40, 116 bzw. der Zuleitungen 41, 42, so kann der ohmsche Widerstand R dieser elektrisch angeschlossenen Dämpfungssystem-Bauteile als Bezugsgröße für die Steuerung der Drosselstelle 31 in Abhängigkeit der Temperatur dienen. Eine Auswertung der temperaturabhängigen Größe dieser elektrisch angeschlossenen Dämpfungssystem-Bauteile ist in gleicher Weise möglich wie es für die Magnetspule 32 als elektrisch angeschlossenes Dämpfungssystem-Bauteil erläutert wurde. Soll die Temperatur des Druckmediums als Referenz zur Steuerung der veränderbaren Drosselstelle 31 herangezogen werden, so wird man zweckmäßigerweise die temperaturabhängige Größe eines der Geber 37, 38, 39, 40 und/oder einer der Zuleitungen 41, 42 und/oder der Magnetspule 32 als Bezugsgröße verwenden. Soll anstatt der Temperatur des Druckmediums oder zusätzlich die Außentemperatur als Referenz zur Steuerung der veränderbaren Drosselstelle 31 verwendet werden, so ist es zweckmäßig z.B. eine temperaturabhängige Größe des bereits anderweitig verwendeten Gebers 116 heranzuziehen.

Wie allgemein bei Temperaturmessungen üblich, kann auch hier die Temperaturmessung nur so weit richtig sein, wie das elektrisch angeschlossene Dämpfungssystem-Bauteil, dessen temperaturabhängige Größe zur Ermittlung der Temperatur herangezogen wird, dieselbe Temperatur besitzt wie das Medium, dessen Temperatur ermittelt werden soll. Deshalb sind in dem dargestellten Ausführungsbeispiel in dem Ventilkörper 44 des Dämpferkolbens 14 weitere Öffnungen 118 vorgesehen. Wegen dieser Öffnungen 118 kommt die Magnetspule 32 intensiv mit dem Druckmedium in Kontakt, weshalb die Magnetspule 32 eine so gut wie gleiche Temperatur wie das Druckmedium besitzt. Aus demselben Grunde sind die Geber 37, 38, 39, 40 vorzugsweise so angeordnet, daß sie an ihrem jeweiligen Einbauort mindestens etwas in das Druckmedium hineinragen; deshalb besitzen auch die Geber 37, 38, 39, 40 eine so gut wie gleiche Temperatur wie das Druckmedium.

Gelegentlich ist auch in dem Ausgleichsraum 110 ein anderweitig benötigtes elektrisch angeschlossenes Dämpfungssystem-Bauteil 119 vorhanden. Dieses Bauteil 119 dient z.B. zum Erfassen eines Druckes innerhalb des Ausgleichsraumes 110. Auch von diesem elektrisch angeschlossenen Dämpfungssystem-Bauteil 119 kann eine temperaturabhängige Größe als Bezugsgröße für die Steuerung der Drosselstelle 31 in Abhängigkeit der Temperatur dienen.

Bei dem erfindungsgemäßen Dämpfungssystem ist in vorteilhafter Weise kein separater Temperatursensor erforderlich, d. h. es ist kein Bauteil erforderlich, welches allein der Erfassung der Temperatur des Druckmediums und/oder der Umgebungstemperatur dient. Auch ist vorteilhafterweise keine zusätzliche elektrische Zuleitung zwischen dem nicht vorhandenen separaten Temperatursensor und dem Steuergerät 4 erforderlich. Geringere Zahl der Bauteile (kein separater Temperatursensor und hierzu keine Zuleitung) senkt den Herstellaufwand und die Ausfallrate des Dämpfungssystems in vorteilhafter Weise beträchtlich.

Das Steuergerät 4 kann z.B. anhand einer vorgegebenen mathematischen Funktion oder eines vorgegebenen Kennfeldes in erfinderischer Weise unter Berücksichtigung der Temperatur die Drosselstelle 31 oder eine sonstige nicht näher erläuterte Drosselstelle innerhalb des Dämpfungssystems beeinflussen.

Das Steuergerät 4 ist z.B. ein Mikrocomputer oder ein sonstiges elektronisches Bauteil. Damit ist der Bauaufwand für das Steuergerät 4 nicht oder so gut wie nicht größer als wenn die Temperatur nicht oder nur mit einem separaten Temperatursensor erfolgen würde. Der gegebenenfalls etwas höhere Bauaufwand für das Steuergerät 4 spielt gegenüber dem Vorteil, daß kein separater Temperatursensor benötigt wird, keine Rolle. Das Steuergerät 4 kann auch aus mehreren, an räumlich verschiedenen Stellen angeordneten Komponenten bestehen.

## Patentansprüche

1. Dämpfungssystem mit einem Schwingungsdämpfer, insbesondere für Fahrzeuge, mit einem ein Druckmedium enthaltenden Zylinder und mit einem verschiebbaren, einen Innenraum des Zylinders unterteilenden Dämpferkolben, sowie mit mindestens einer, eine Dämpfung des Schwingungsdämpfers beeinflussende, veränderbare Drosselstelle enthaltende Strömungsverbindung, wobei die Drosselstelle in Abhängigkeit einer Temperatur gesteuert werden kann, ferner mit mindestens einem elektrisch angeschlossenen Dämpfungssystem-Bauteil, dadurch gekennzeichnet, daß eine temperaturabhängige Größe des elektrisch angeschlossenen Dämpfungssystem-Bauteils (32, 37, 38, 39, 40, 41, 42, 108, 116, 119) als Bezugsgröße für die Steuerung der Drosselstelle (31) in Abhängigkeit der Temperatur dient.

2. Dämpfungssystem nach Anspruch 1, dadurch gekennzeichnet, daß das elektrisch angeschlossene Dämpfungssystem-Bauteil eine Magnetspule (32) ist.

3. Dämpfungssystem nach Anspruch 1 oder Anspruch 2, dadurch gekennzeichnet, daß das elektrisch angeschlossene Dämpfungssystem-Bauteil (32) zum Verändern der Drosselstelle (31) bestimmt ist.

4. Dämpfungssystem nach Anspruch 1 oder Anspruch 2, dadurch gekennzeichnet, daß das elektrisch angeschlossene Dämpfungssystem-Bauteil (37, 38, 39, 116) zum Messen einer Stellposition dient.

5. Dämpfungssystem nach Anspruch 1, dadurch gekennzeichnet daß das elektrisch angeschlossene Dämpfungssystem-Bauteil (41, 42) eine Zuleitung (41, 42) ist.

6. Dämpfungssystem nach einem der vorhergehenden Ansprüche, dadurch gekennzeichnet, daß die temperaturabhängige Größe ein ohmscher Widerstand (R) des elektrisch angeschlossenen Dämpfungssystem-Bauteils (32, 37, 38, 39, 40, 41, 42, 108, 116, 119) ist.

7. Dämpfungssystem nach einem der vorhergehenden Ansprüche, dadurch gekennzeichnet, daß als temperaturabhängige Größe des elektrisch angeschlossenen Dämpfungssystem-Bauteils (32, 37, 38, 39, 40, 41, 42, 108, 116, 119) eine Phasenlage zwischen Strom (I) und Spannung (U) heranziehbar ist.

8. Dämpfungssystem nach einem der vorhergehenden Ansprüche, dadurch gekennzeichnet, daß die Drosselstelle (31) durch Verstellen eines Ventilgliedes (34) verstellbar ist.

## Claims

1. Damping system with a vibration damper, in particular for vehicles, having a cylinder which contains a pressure medium and having a displaceable damper piston which subdivides an interior of the cylinder and having at least one flow connection which influences damping of the vibration damper and contains a variable throttle point, the throttle point being controlled as a function of a temperature, in addition having at least one electrically connected damping system component, characterized in that a temperature-dependent variable of the electrically connected damping system component (32, 37, 38, 39, 40, 41, 42, 108, 116, 119) serves as reference variable for the control of the throttle point (31) as function of the temperature.

2. Damping system according to Claim 1, characterized in that the electrically connected damping system component is a magnetic coil (32).

3. Damping system according to Claim 1 or Claim 2, characterized in that the electrically connected damping system component (32) is intended to vary the throttle point (31).

4. Damping system according Claim 1 or Claim 2, characterized in that the electrically connected damping system component (37, 38, 39, 116) serves to measure an adjustment position.

5. Damping system according to Claim 1, characterized in that the electrically connected damping system component (41, 42) is a feed line (41, 42).

6. Damping system according to one of the preceding claims characterized in that the temperature-dependent variable is an ohmic resistance (R) of the electrically connected damping system component (32, 37, 38, 39, 40, 41, 42, 108, 116, 119).

7. Damping system according to one of the preceding claims, characterized in that a phase position between current (I) and voltage (U) can be used as temperature-dependent variable of the electrically connected damping system component (32, 37, 38, 39, 40, 41, 42, 108, 116, 119).

8. Damping system according to one of the preceding claims, characterized in that the throttle point (31) can be adjusted by adjusting a valve element (34).

## Revendications

1. Système d'amortissement comportant un amortisseur d'oscillations, notamment pour véhicules avec un cylindre contenant un fluide sous pression et un piston d'amortisseur coulissant dans ce cylindre et en subdivisant son volume, ainsi qu'au moins une liaison d'écoulement ayant un point d'étranglement variable influençant l'amortissement de l'amortisseur d'oscillations, le point d'étranglement pouvant être commandé en fonction d'une température, ainsi qu'un composant de système d'amortissement relié électriquement, caractérisé en ce qu'une grandeur dépendant de la température du composant du système d'amortissement relié électriquement (32, 37, 38, 39, 40, 41, 42, 108, 116, 119) constitue une grandeur de référence pour la commande du point d'étranglement (31) en fonction de la température.

2. Système d'amortissement selon la revendication 1, caractérisé en ce que le composant du système d'amortissement, relié électriquement, est une bobine électromagnétique (32).

3. Système d'amortissement selon la revendication 1 ou la revendication 2, caractérisé en ce que le composant du système d'amortissement (32) relié électriquement est destiné à modifier le point d'étranglement (31).

4. Système d'amortissement selon la revendication 1 ou 2, caractérisé en ce que le composant d'amortissement (37, 38, 39, 116), relié électriquement, sert à mesurer une position de réglage.

5. Système d'amortissement selon la revendication 1, caractérisé en ce que le composant du système d'amortissement (41, 42) relié électriquement est une ligne d'alimentation (41, 42).

6. Système d'amortissement selon l'une des revendications précédentes, caractérisé en ce que la grandeur dépendant de la température est une résistance ohmique (R) du composant du système d'amortissement (32, 37, 38, 39, 40, 41, 42, 108, 116, 119) relié électriquement.

7. Système d'amortissement selon l'une des revendications précédentes, caractérisé en ce que la grandeur dépendant de la température du composant d'amortissement (32, 37, 38, 39, 40, 41, 42, 108, 116, 119), relié électriquement est extraite de la phase entre le courant (I) et la tension (U).

8. Système d'amortissement selon l'une des revendications précédentes, caractérisé en ce que le point d'étranglement (31) est réglable par réglage d'un organe de soupape (34).
